# FASCICULE DE BREVET EUROPEEN

(11) **EP 1 888 927 B1**
(45) Date de publication et mention de la délivrance du brevet: **09.06.2010**
(21) Numéro de dépôt: 06778921.4
(22) Date de dépôt: 09.06.2006
(51) Int. Cl.: F16C 11/06, F16D 3/41

(54) **ARTICULATION DE PRECISION A BILLE**
PRÄZISIONSKUGELGELENK
PRECISION BALL ARTICULATION

(30) Priorité: 10.06.2005 FR 0551573
(43) Date de publication de la demande: 20.02.2008
(73) Titulaire: Commissariat à l'énergie atomique et aux énergies alternatives, 75015 Paris (FR)
(72) Inventeur: BRISSET, Didier, F-33170 Gradignan (FR); PAQUIGNON, Gaël, F-33114 Le Barp (FR); DAVID, Jean-Marie, F-59650 Villeneuve d'Ascq (FR); DIOLEZ, Gilles, F-30000 Nîmes (FR); PERIN, Jean-Paul, F-38180 Seyssins (FR); CHATAIN, Denis, F-38380 Saint Ismier (FR)
(74) Mandataire: Poulin, Gérard
(86) Numéro de dépôt international: PCT/FR2006/050543
(87) Numéro de publication internationale: WO 2006/131684

(56) Documents cités:
- EP-A- 1 122 452
- FR-A- 947 212
- FR-A- 1 049 995
- US-A1- 2004 192 447

## Description

### DOMAINE TECHNIQUE

Le sujet de cette invention est une articulation de précision à bille joignant deux organes en prolongement. Elle peut s'appliquer, entre autres, à un bras de robot articulé. Cette articulation est double ou triple, c'est-à-dire qu'elle autorise des rotations des deux organes dans toutes les directions et éventuellement des pivotements autour de leurs axes.

Il est possible de construire les articulations multiples de diverses manières, par exemple avec des tourillons aux axes de rotations concourants ou des languettes flexibles. Mais si on cherche une très grande précision de la position du centre de rotation, et une course angulaire importante, de plusieurs dizaines de degrés, ces mécanismes ne conviennent pas à cause des jeux des paliers de tourillonnement et de la rigidité que les languettes doivent garder.

On recourt donc à une autre famille connue d'articulations, comprenant une bille sphérique tournant sur un siège concave dans lequel elle est ajustée, pour constituer l'invention. Le centre de rotation est déterminé avec une très grande précision pour ce genre d'articulations, même sur une grande course angulaire. De plus, l'articulation est résistante. Un effort de compression doit toutefois s'exercer sur la bille pour la maintenir au contact des deux organes et éviter la disjonction de l'articulation.

Les documents FR-A-1 049 995 et FR-A- 947 212 décrivent des systèmes articulés utilisés avant tout pour réaliser un coincement à une position angulaire choisie et qui comprennent une sphère fixée à une tige, une chape et un collier articulés ensemble à un axe, et une calotte sphérique dépendant de la chape et qu'un ressort repousse contre la sphère en attirant le collier contre celle-ci. Le coincement de la sphère est réalisé entre le collier et la calotte sphérique. Un ajustement de position concourante convenable entre la tige fixée à la sphère et une autre tige fixée à la chape ne peut être obtenu en raison des incertitudes de fixation de la sphère sur la tige et de position de l'axe d'articulation par rapport au centre de la sphère, qui dépend des dimensions réelles du collier de coincement.

Un but essentiel de l'invention est de lever cette difficulté afin d'élargir le domaine d'application d'une telle articulation à bille, et notamment à la liaison de segments d'un bras de robot soumis à des efforts imprévus en compression ou en traction.

Elle concerne une articulation joignant deux organes en prolongement et comprenant une bille placée entre deux sièges concaves ménagés sur les organes, **caractérisée en ce qu**'elle comprend deux chapes concourantes placées sur les organes, un anneau articulé aux deux chapes et entourant la bille, et un moyen de rappel placé entre une des chapes et un des sièges et repoussant cet organe vers la bille.

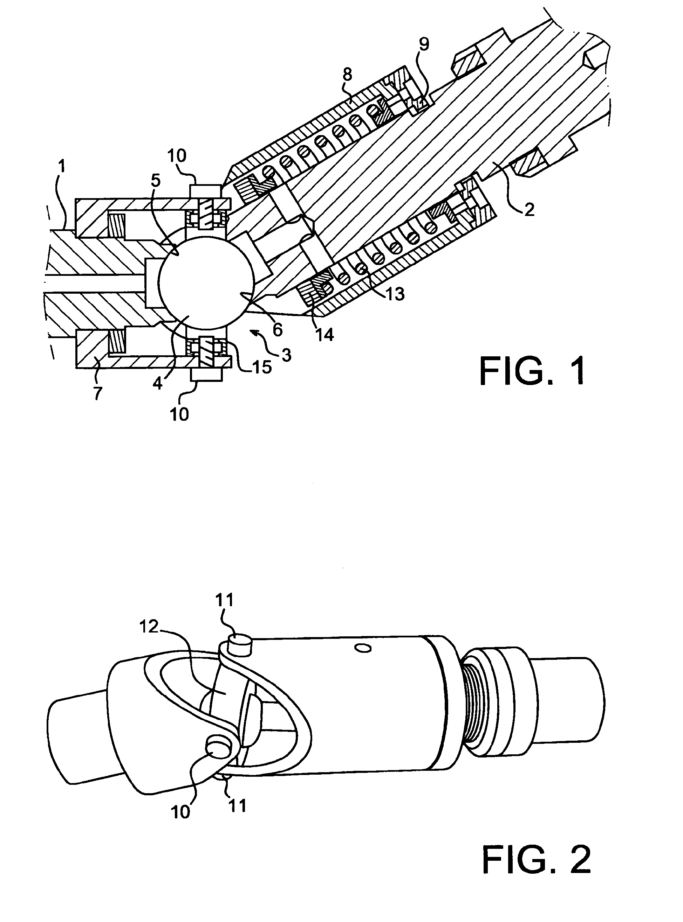

L'invention sera maintenant décrite en liaison aux figures 1 et 2, qui représentent la région de l'articulation en coupe et en vue extérieure. La réalisation représentée aux figures 1 et 2 comprend deux segments 1 et 2 successifs d'un bras de robot en prolongement et dont l'angle peut être réglé par un cercle de vérins (non représenté) les unissant, et qui sont joints par une articulation 3. L'articulation 3 est composite et comprend une bille 4 dont la sphéricité est garantie à une grande précision (il peut s'agir d'une bille de roulement, que les fabricants savent construire avec une grande qualité) en appui sur des sièges circulaires 5 et 6 circulaires et concaves (ici coniques) aux extrémités respectives des segments 1 et 2. L'articulation 3 comprend encore deux chapes 7 et 8 respectivement engagées autour des extrémités des segments 1 et 2. La chape 7 est fixée sur le segment 1, et la chape 8 est munie à l'arrière d'une collerette 9 s'engageant dans une gorge du segment 2. Cet ajustement autorise la rotation en pivotement de la chape 8 par rapport au segment 2.

Les chapes 7 et 8 comprennent chacun une paire de pièces d'axe 10 et 11 en prolongement. De plus, l'axe des pièces 10 croise celui des pièces 11. Un anneau 12 est articulé aux pièces d'axe 10 et 11. L'ensemble composé des chapes 7 et 8, des pièces 10 et 11 et de l'anneau 12 forme un cardan enveloppant la bille 4. La bille 4 reste libre, c'est-à-dire qu'elle n'est assujettie à aucune pièce et qu'elle serait libre de choir si les segments 1 et 2 étaient écartés l'un de l'autre. L'anneau 12 est aussi séparé de la bille 4, de plus grand rayon qu'elle. Un ressort 13 s'étend dans la chape 8 coaxialement au segment 2. Il est comprimé entre la région de la collerette 9 et une rondelle 14 fixée au segment 2, et crée une précontrainte dans l'articulation 3 par laquelle le segment 2 est rappelé vers la bille 4. Des paliers 15 assurent le tourbillonnement des pièces d'axes 10 et 11.

Le fonctionnement et les avantages de l'articulation 3 peuvent être donnés comme ceci. La précision de position du centre de rotation de l'articulation 3 est garantie par l'appui des sièges 5 et 6 sur la bille 4. La précision est très grande sur une grande plage angulaire si la bille 4 est directement en appui sur des sièges 5 et 6 coniques, sans interposition d'éléments intermédiaires de roulement par exemple. L'anneau 12 articulé aux segments 1 et 2 les relie aussi mais sans précision. L'absence de tout contact entre l'anneau 12 et la bille 4 empêche de nuire au concours des axes des segments 1 et 2 au centre de la bille 4. La précharge du ressort 13 repousse le segment 2 vers le segment 1 pour maintenir le contact de la bille 4 sur les sièges 5 et 6 tant qu'un effort de traction assez important ne s'exerce sur les segments 1 et 2. La butée de la collerette 9 dans sa gorge quand le segment 2 est tiré continue d'empêcher la luxation de l'articulation 3 en retenant la bille 4, qui reste retenue entre les sièges 5 et 6 et l'anneau 12 puisqu'il n'est pas possible d'éloigner beaucoup le segment 2. Un service normal de l'articulation 3 reprend dès que l'effort de traction important cesse, le ressort 13 ramenant le segment 2 en place et le siège 6 en butée contre la bille 4.

Une sûreté excellente de l'articulation 3 est donc obtenue, conjointe à une grande simplicité de structure. Le centre de rotation de l'articulation 3 demeure dans une zone très petite, de l'ordre d'un micron de rayon. L'articulation 3 peut résister à des efforts importants. L'usure de la bille 4 ne réduit pas la qualité de l'articulation puisque le ressort 13 maintient le contact en rapprochant les sièges 5 et 6 l'un de l'autre. Aucune lubrification n'est nécessaire.

## Revendications

1. Articulation (3) joignant deux organes (1, 2) en prolongement et comprenant une bille (4) placée entre deux sièges concaves (5, 6) ménagés sur les organes, **caractérisée en ce qu'**elle comprend deux chapes (7, 8) concourantes placées sur les organes, un anneau (12) articulé aux deux chapes et entourant la bille, et un moyen de rappel (13) placé entre une des chapes et un des organes et repoussant cet organe vers la bille.

2. Articulation selon la revendication 1, **caractérisée en ce que** la chape (8) munie du moyen de rappel (13) est associée à l'organe (2) muni du moyen de rappel par un moyen à butée (9) s'opposant à la luxation de l'articulation.

3. Articulation selon la revendication 1 ou 2, **caractérisée en ce qu'**elle comprend une liaison pivotante (9) entre un des organes et une des chapes.

4. Articulation selon la revendication 1, 2 ou 3, **caractérisée en ce que** les sièges concaves (5, 6) sont coniques.

5. Articulation selon l'une quelconque des revendications 1 à 4, **caractérisée en ce que** l'anneau est séparé de la bille.

6. Articulation selon l'une quelconque des revendications 1 à 5, **caractérisée en ce qu'**elle est une articulation de bras de robot articulé.

## Claims

1. A joint (3) joining two members (1,2) in extension and comprising a ball (4) placed between two concave seats (5,6) made on the members, **characterized in that** it comprises two convergent fittings (7,8) placed on the members, a ring (12) jointed to both fittings and surrounding the ball, and a return means (13) placed between one of the fittings and one of the members and pushing away this member towards the ball.

2. The joint according to claim 1, **characterized in that** the fitting (8) provided with the return means (13) is associated with the member (2) provided with the return means by an abutment means (9) opposing dislocation of the joint.

3. The joint according to claim 1 or 2, **characterized in that** it comprises a pivoting link (9) between one of the members and one of the fittings.

4. The joint according to claim 1, 2 or 3, **characterized in that** the concave seats (5,6) are conical.

5. The joint according to any of claims 1 to 4, **characterized in that** the ring is separated from the ball.

6. The joint according to any of claims 1 to 5, **characterized in that** it is a joint of a jointed robot arm.

## Patentansprüche

1. Gelenk (3), das zwei Organe (1, 2) fortsetzungsförmig verbindet und eine Kugel (4) umfasst, die eingesetzt ist zwischen zwei an den Organen vorgesehenen konkaven Sitzen (5, 6),
**dadurch gekennzeichnet, dass** es zwei auf den Organen angebrachte zusammenwirkende Gabelköpfe (7, 8), einen mit beiden Gabelköpfen gelenkig verbundenen und die Kugel umgebende Ring (12) und eine Rückstelleinrichtung (13) umfasst, die sich zwischen einem der Kugelköpfe und einem der Organe befindet und dieses Organ in Richtung Kugel drückt.

2. Gelenk nach Anspruch 1, **dadurch gekennzeichnet, dass** der mit den Rückstelleinrichtungen (13) versehene Gabelkopf (8) mit dem mit den Rückstelleinrichtungen versehenen Organ (2) durch einen Anschlag (9) vereinigt ist, der sich der Verrenkung des Gelenks widersetzt.

3. Gelenk nach Anspruch 1 oder 2, **dadurch gekennzeichnet, dass** es eine schwenkbare Verbindung (9) zwischen einem der Organe und einem der Kugelköpfe gibt.

4. Gelenk nach Anspruch 1, 2 oder 3, **dadurch gekennzeichnet, dass** die konkaven Sitze (5, 6) konisch sind.

5. Gelenk nach einem der Ansprüche 1 bis 4, **dadurch gekennzeichnet, dass** der Ring von der Kugel getrennt ist.

6. Gelenk nach einem der Ansprüche 1 bis 5, **dadurch gekennzeichnet, dass** es ein Gelenk eines Robotergelenkarms ist.
